# FASCICULE DE BREVET EUROPEEN

(11) **EP 0 730 712 B1**
(45) Date de publication et mention de la délivrance du brevet: **18.07.2001**
(21) Numéro de dépôt: 95933460.8
(22) Date de dépôt: 29.09.1995
(51) Int. Cl.: F16F 15/127

(54) **DISPOSITIF PREAMORTISSEUR DE TORSION**
VORDÄMPFUNGSANLAGE FÜR ROTATIONSSCHWINGUNGEN
TORSIONAL PRE-DAMPER DEVICE

(30) Priorité: 29.09.1994 FR 9411642
(43) Date de publication de la demande: 11.09.1996
(73) Titulaire: VALEO, 75017 Paris (FR)
(72) Inventeur: VILLATA, Gino, I-14021 Buttigliera d'Asti (IT); PHELPS, Nicolas, F-75017 Paris (FR)
(74) Mandataire: Gamonal, Didier
(86) Numéro de dépôt international: FR9501269
(87) Numéro de publication internationale: WO9610138

(56) Documents cités:
- DE-A- 3 322 412
- DE-U- 8 425 598
- FR-A- 2 517 006
- GB-A- 2 169 988
- US-A- 1 946 956

## Description

La présente invention concerne un dispositif de préamortissement de torsion comportant au moins deux parties coaxiales, montées rotatives l'une par rapport à l'autre dans les limites d'un débattement angulaire déterminé et associées à des moyens élastiques de préamortissement et de centrage.

La présente invention concerne plus particulièrement un perfectionnement à un sous-ensemble de préamortissement destiné à amortir l'impact du choc d'un moyeu et d'un voile de moyeu en fin de course de leur débattement angulaire.

Dans un dispositif d'amortissement de torsion connu, l'une des parties rotatives porte un disque de friction, destiné à être solidarisé en rotation avec un premier arbre, en pratique un arbre menant, le vilebrequin du moteur à combustion interne dans le cas d'une application à un véhicule automobile, tandis qu'une autre desdites parties rotatives comporte un moyeu par lequel elle est destinée à être solidarisée en rotation avec un deuxième arbre, en pratique un arbre mené, l'arbre d'entrée d'une boîte de vitesses dans le cas concerné d'un tel véhicule automobile.

Dans un tel ensemble, il est connu par exemple de par le document FR-A-2 496 210 conforme au préambule de la revendication 1, d'ajouter un sous-ensemble de préamortissement de torsion dans lequel la délimitation du débattement angulaire entre les deux parties coaxiales est assurée par des moyens d'engrènement à jeu munis de petits plots, réalisés en élastomère, placés sur la denture d'engrènement à jeu d'une des parties coaxiales, contre lesquels viennent buter les éléments d'engrènement à jeu de l'autre partie coaxiale pour réduire le bruit des chocs de fin de course des moyens d'engrènement à jeu.

Cette solution présente néanmoins des inconvénients. De par leur taille réduite, les plots n'assurent en effet qu'un amortissement ponctuel, d'où un bruit résiduel qui ne peut être éliminé. De plus, la durée de vie de ces éléments d'élastomère est limitée et ceux-ci affaiblissent la denture sur laquelle ils sont placés.

Pour pallier ces inconvénients, on peut songer à faire appel à un agencement avec un insert en matériau absorbant les chocs comme décrit dans le document DE-A-33 22 412, conforme au préambule de la revendication 1.

Dans ce document il est prévu un sous ensemble de préamortissement solidaire de l'une des rondelles de guidage que comporte le dispositif d'amortissement de torsion. L'insert est de grande longueur axiale et est calé axialement à la faveur d'un corps de moyeu que comporte le voile de moyeu, les moyens d'engrènement à jeu intervenant entre le moyeu et le corps de moyeu.

Il en résulte que l'insert est axialement de grande longueur ce qui est un inconvénient notamment pour des raisons de coûts et de mise en place de l'insert.

Pour pallier ces inconvénients, la présente invention propose un nouveau dispositif préamortisseur de torsion, selon la partie caractérisante de la revendication 1.

Tout le couple de rotation est transmis par l'intermédiaire de l'insert couronne. Ce dernier est de fabrication peu coûteuse et de mise en place aisée.

En outre, les moyens d'engrènement à jeu (les dentures mâle et femelle) ne sont pas affaiblis contrairement à ceux du document FR-A-2 496 210.

D'autres avantages de l'invention ressortiront d'ailleurs de la description qui va suivre, à titre d'exemple, en référence aux dessins sur lesquels:
- la figure 1 est une vue en coupe d'une friction d'embrayage avec un préamortisseur suivant l'invention ;
- la figure 2 est, à échelle supérieure, une vue du détail II de l'encadré de la figure 1 ;
- la figure 3 est une vue en coupe de la figure 2, suivant la ligne III-III ;
- la figure 4 est une vue analogue à celle de la figure 3 selon un autre mode de réalisation de l'invention.

Ces figures illustrent à titre d'exemple l'application de l'invention à un dispositif amortisseur de torsion, qui, destiné à constituer une friction d'embrayage pour embrayage de véhicule automobile, comporte, successivement montées rotatives deux à deux les unes par rapport aux autres, trois parties coaxiales, à savoir, une partie A, constituée pour l'essentiel par un moyeu 10, une partie B, constituée pour l'essentiel par un voile de moyeu il, qui entoure le moyeu 10, et une partie C, constituée pour l'essentiel par deux rondelles de guidage 12, disposées de part et d'autre du voile de moyeu 11 et entourant le moyeu 10, liées l'une à l'autre par des colonnettes 9 et donc animées du même mouvement de rotation.

La partie coaxiale C porte un disque de friction 13, dont les garnitures de friction sont destinées, de manière connue, à être serrées entre deux plateaux liés en rotation à un arbre menant, l'arbre de sortie au vilebrequin du moteur dans le cas concerné d'un véhicule automobile.

Le moyeu 10 présente quant à lui des cannelures intérieures 14, destinées à le solidariser en rotation à un arbre mené, l'arbre d'entrée de la boîte de vitesses associée dans le cas d'un tel véhicule automobile.

Les parties coaxiales B et C sont montées rotatives l'une par rapport à l'autre, à l'encontre de moyens élastiques interposés circonférentiellement entre elles, constitués, dans la forme de réalisation représentée, par des ressorts 15 et 15a du type ressorts à boudin montés, de manière connue, dans des fenêtres pratiquées en vis-à-vis dans les rondelles de guidage 12 et dans le voile de moyeu 11. L'ensemble ainsi constitué par les parties coaxiales B, C et les ressorts 15, 15a constitue le dispositif d'amortissement principal de la friction d'embrayage. Son fonctionnement, bien connu par lui-même, ne sera pas décrit plus en détail et ne relève pas de la présente invention.

Les parties coaxiales A et B sont elles aussi montées rotatives l'une par rapport à l'autre, à l'encontre de moyens élastiques de préamortissement et de centrage, dans les limites d'un débattement angulaire déterminé par des moyens d'engrènement à jeu 16 définis entre le voile il et le moyeu 10.

En pratique, le moyeu 10 présente à sa périphérie externe, sur une portion longitudinale 17 de sa face externe, des saillies radiales 18 formant une denture mâle. Le voile de moyeu 11 présente quant à lui, à sa périphérie interne, en regard de la portion 17 du moyeu 10, des échancrures 19, d'ouverture angulaire supérieure à celle des dents 18, formant ainsi une denture femelle. Une dent 18 est engagée dans chaque échancrure 19, le débattement angulaire possible entre les parties coaxiales A et B se trouvant ainsi limité par venue en butée des dents 18 du moyeu 10 avec les flancs correspondants des échancrures 19 du voile Il. Les dents 18 et 19 constituent ainsi les moyens d'engrènement à jeu 16 précités et ont ici une forme globalement trapézoïdale.

Le dispositif est complété par un sous-ensemble de préamortissement comprenant notamment une cassette de préamortissement de type connu, agencée entre le moyeu 10 et le voile de moyeu 11 dans les limites de leur débattement angulaire déterminé par les moyens d'engrènement à jeu 16. Cette cassette est située dans un plan décalé de celui du voile de moyeu 11, selon la direction axiale. Elle est montée axialement entre le voile 11 et l'une des rondelles de guidage 12. Elle est constituée par un voile secondaire 40 solidaire, ici par sertissage, du moyeu 10, placé entre des flasques 26, eux-mêmes liés en rotation au voile de moyeu 11 par des doigts 41. Les doigts 41 sont engagés dans des fenêtres du voile de moyeu 11, de sorte que les flasques 26 sont entraînés en rotation avec le voile de moyeu 11. Des ressorts 27 à action circonférentielle sont intercalés entre les flasques 26 d'une part, et le voile secondaire 40 d'autre part, selon une disposition classique, lesdits flasques 26 et ledit voile 40 présentant en vis-à-vis des fenêtres de logement des ressorts 27.

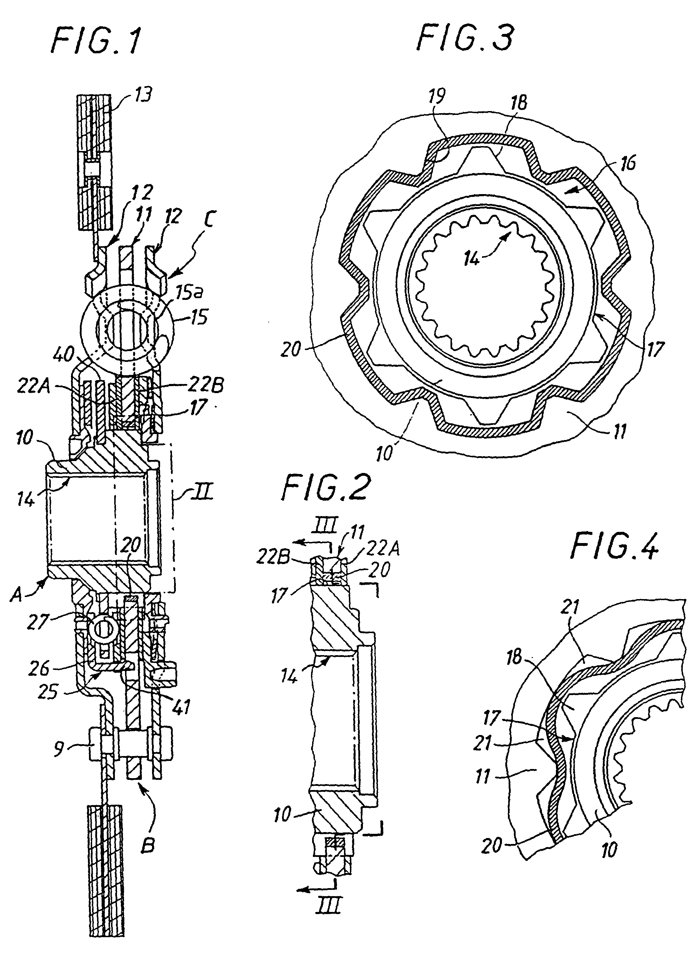

Les ressorts 27 sont donc sollicités élastiquement par une rotation relative du voile de moyeu 11 et du moyeu 10 et agissent donc à l'encontre d'une telle rotation, tendant à ramener le voile et le moyeu dans une position intermédiaire de leur débattement angulaire (voir figure 3). Une rondelle de frottement 22A peut être intercalée entre la cassette de préamortissement et le voile de moyeu 11. Le fonctionnement d'une telle cassette de préamortissement est connu.

Pour mémoire, on rappellera que les ressorts 27 sont moins raides que les ressorts 15, 15a. Dans une première phase, les ressorts 27 sont comprimés, les rondelles de guidage 12 et le voile 11 formant un ensemble par l'intermédiaire des ressorts 15, 15a Plus raides, ce mouvement se poursuivant jusqu'à annulation du jeu des moyens d'engrènement à jeu 16. Après, les ressorts 27 restent bandés et un mouvement relatif se produit entre les voiles 11 et les rondelles de guidage 12 avec intervention des ressorts 15, 15a.

On notera que les doigts 41 sont issus de l'un des flasques 26 et traversent chacun une échancrure pratiquée à la périphérie externe de l'autre flasque 26.

Chaque doigt 41 présente une déformation sphérique à son extrémité pour montage par clipsage du flasque 26 à doigts 41 sur l'autre flasque 26, tous deux métalliques, après montage du voile secondaire 40 et des ressorts 27.

Selon une caractéristique importante, le sous-ensemble de préamortissement comprend aussi un insert, en forme de couronne, en matériau absorbant les chocs, placé entre les périphéries de la denture mâle du moyeu 10 et de la denture femelle du voile de moyeu 11.

Selon un premier mode de réalisation, représenté à la figure 3, l'insert est en matériau absorbant les chocs ou limitant le bruit, par exemple en plastique, plomb, fonte ou aluminium, et plus amortissant que l'acier. Il peut alors épouser la denture mâle ou, selon un mode de réalisation préféré, la denture femelle. Lorsque l'insert 20 est placé contre la denture du voile de moyeu 11, il est plaqué et retenu contre elle par la force centrifuge.

Des surépaisseurs peuvent être ménagées sur les flancs de contact de l'insert 20 avec les dentures afin d'augmenter la capacité absorbante de l'insert.

Selon un second mode de réalisation, représenté à la figure 4, la propriété absorbante de l'insert 20 lui est essentiellement conférée par sa conformation. Des vides 21 sont ménagés entre l'insert 20 et les flancs de contact des dentures mâles et femelles, de sorte que ledit insert ne recouvre totalement aucune des deux dentures.

Avant d'arriver en fin de course, les dents 18 vont écraser l'insert 20 vers les flancs des échancrures 19, réduisant les vides 21. Le choc de fin de course des dents 18 contre les flancs des échancrures 19 est ainsi amorti.

Dans tous les cas, la mise en place de l'insert sera facilitée si celui-ci est fendu.

Afin d'éviter un déplacement de l'insert 20 le long de l'axe autour duquel sont situés le moyeu 10 et le voile de moyeu 11, selon une caractéristique de l'invention des rondelles de frottement, 22A et 22B, coaxiales au voile 11, sont avantageusement disposées de part et d'autre de l'insert 20. Celui-ci se trouve alors retenu axialement entre ces deux rondelles.

Selon un mode de réalisation particulier, l'insert 20 peut être solidaire de l'une des rondelles de frottement, soit qu'il soit collé sur cette rondelle, soit qu'il soit surmoulé.

Bien entendu, l'insert peut recouvrir la denture mâle. Il peut être collé ou surmoulé sur le moyeu 10 ou le voile.

L'insert peut avoir une épaisseur variable et avoir par exemple une épaisseur plus grande au niveau de ses zones actives d'amortissement des chocs et moins grande au niveau de ses zones inactives.

Les rondelles de frottement 22A et 22B peuvent présenter à leur périphérie interne une denture femelle pour engrener avec la denture mâle du moyeu 10 avec jeu inférieur à celui prévu entre la denture mâle du moyeu 10 et la denture femelle du voile de moyeu 11.

Cela contribue à freiner en fin de course le mouvement entre les parties B et A, lesdites rondelles 22A,22B étant soumises à l'action d'une rondelle Belleville prenant appui sur la rondelle de guidage 12 non associée au disque de friction 13 pour action sur une rondelle de répartition liée en rotation par des pions à ladite rondelle 12 (figure 1) et serrage des rondelles 22A et 22B au contact du voile 11 et de la cassette de préamortissement entre le voile 11 et l'autre rondelle 12.

Bien entendu, une seule des rondelles de frottement 22A,22B peut engrener à jeu avec le moyeu 10, l'autre étant par exemple solidaire de la rondelle de répartition. Les rondelles 22A,22B peuvent engrener avec des jeux différents avec le moyeu 10, voire même sans jeu. Toutes les combinaisons sont possibles.

## Revendications

1. Dispositif préamortisseur de torsion, comportant deux parties coaxiales (A, B) montées rotatives l'une par rapport à l'autre, dans les limites d'un débattement angulaire déterminé par des moyens d'engrènement à jeu (16), à l'encontre de moyens élastiques (27), dits de préamortissement et de centrage, dispositif dans lequel les moyens d'engrènement à jeu comportent une denture mâle (18), que présente à sa périphérie externe un moyeu (10) constituant pour l'essentiel une première (A) desdites parties coaxiales (A, B) et une denture femelle (19), que présente à sa périphérie interne un voile de moyeu (11) constituant pour l'essentiel une seconde (B) desdites parties coaxiales, ledit voile (11) entourant le moyeu (10), dispositif dans lequel il est prévu une troisième partie (C), constituée pour l'essentiel par deux rondelles de guidage (12), disposées de part et d'autre du voile de moyeu (11) et entourant le moyeu (10), et dispositif dans lequel d'une part, un insert couronne (20), en matériau absorbant les chocs, est disposé entre les périphéries desdites dentures mâles (18) et femelles (19) et, d'autre part, un sous-ensemble de préamortissement comprend une cassette de préamortissement comprenant les moyens élastiques de préamortissement (27),ladite cassette étant agencée entre le moyeu (10) et le voile de moyeu (11), en étant située dans un plan décalé de celui du voile de moyeu (11), **caractérisé en ce que** la cassette de préamortissement est montée axialement entre le voile (11) et l'une des rondelles de guidage (12) de la troisième partie (C) et en ce que des rondelles de frottement (22A, 22B), immobilisant l'insert axialement, sont disposées de part et d'autre dudit insert et sont coaxiales au voile de moyeu (11).

2. Dispositif selon la revendication 1, caractérisé en ce que ladite cassette comprend un voile secondaire (40) placé entre deux flasques (26) entraînés en rotation par le voile de moyeu (11).

3. Dispositif selon la revendication 1 ou 2, caractérisé en ce que l'insert (20) recouvre la denture femelle (19).

4. Dispositif selon l'une quelconque des revendications 1 à 3, caractérisé en ce que l'insert recouvre la denture mâle.

5. Dispositif selon l'une quelconque des revendications 1 à 4, caractérisé en ce que l'insert (20) est fendu.

6. Dispositif selon l'une quelconque des revendications précédentes, caractérisé en ce que ledit insert présente une épaisseur variable entre les zones entrant en contact avec les dentures et les zones non actives.

7. Dispositif selon l'une quelconque des revendications précédentes, caractérisé par des surépaisseurs ménagées sur les flancs de contact de l'insert (20) avec les dentures (18, 19).

8. Dispositif selon l'une quelconque des revendications précédentes, caractérisé en ce que l'insert épouse la forme de la denture qui le porte.

9. Dispositif selon l'une quelconque des revendications précédentes, caractérisé en ce que des vides (21) sont ménagés entre l'insert et l'une des dentures qui le porte, qui se réduisent avec l'écrasement de l'insert.

10. Dispositif selon l'une quelconque des revendications précédentes, caractérisé en ce que le matériau de l'insert (20) est choisi parmi le plastique, le plomb, la fonte ou l'aluminium.

11. Dispositif selon l'une quelconque des revendications précédentes, caractérisé en ce que l'insert (20) est solidaire de l'une des rondelles (22A, 22B) de frottement voisines.

12. Dispositif selon la revendication 11, caractérisé en ce que l'insert est collé ou surmoulé au moyeu ou au voile.

13. Dispositif selon la revendication 11, caractérisé en ce que l'insert (20) est soit collé, soit surmoulé à une desdites rondelles de frottement.

14. Dispositif selon l'une quelconque des revendications 11 à 13, caractérisé en ce que l'une au moins des rondelles de frottement (22A,22B) présente à sa périphérie interne une denture femelle pour engrener avec la denture mâle (18) du moyeu (10) avec un jeu inférieur à celui prévu entre la denture mâle (18) du moyeu (10) et la denture femelle (19) du voile de moyeu (11).

## Patentansprüche

1. Torsionsvordämpfervorrichtung, umfassend zwei koaxiale Teile (A, B), die relativ zueinander innerhalb der Grenzen einer durch spielbehaftete Eingriffsmittel (16) bestimmten Winkelauslenkung entgegen elastischen Mitteln (27) drehbar gelagert sind, die als Vordämpfungs- und Zentriermittel bezeichnet werden, wobei die mit Spiel wirksamen Eingriffsmittel eine vorstehende Zahnung (18), die eine im wesentlichen einen ersten (A) der besagten koaxialen Teile (A, B) bildende Nabe (10) an ihrem äußeren Umfang aufweist, und eine Aufnahmezahnung (19) umfassen, die eine im wesentlichen einen zweiten (B) der besagten koaxialen Teile bildende Nabenscheibe (11) an ihrem inneren Umfang aufweist, wobei die besagte Vorrichtung einen dritten Teil (C) umfaßt, der im wesentlichen durch zwei Führungsscheiben (12) gebildet wird, die beiderseits der Nabenscheibe (11) angeordnet sind und die die Nabe (12) umgeben, und wobei einerseits ein Kranzeinsatz (20) aus einem die Stöße absorbierenden Werkstoff zwischen den Umfängen der besagten vorstehenden Zahnung (18) und Aufnahmezahnung (19) angeordnet ist, während andererseits eine Vordämpfungsuntergruppe eine Vordämpfungskassette umfaßt, die die elastischen Vordämpfungsmittel (27) enthält, wobei die besagte Kassette zwischen der Nabe (10) und der Nabenscheibe (11) angeordnet ist und sich in einer zur Ebene der Nabenscheibe (11) versetzten Ebene befindet, **dadurch gekennzeichnet**, daß die Vordämpfungskassette axial zwischen der Nabenscheibe (11) und einer der Führungsscheiben (12) des dritten Teils (C) angebracht ist und daß Reibscheiben (22A, 22B) den Einsatz axial sichern, wobei sie beiderseits des besagten Einsatzes und koaxial zur Nabenscheibe (11) angeordnet sind.

2. Vorrichtung nach Anspruch 1, **dadurch gekennzeichnet**, daß die besagte Kassette eine Sekundärnabenscheibe (40) umfaßt, die zwischen zwei durch die Nabenscheibe (11) drehend angetriebenen Flanschen (26) angebracht ist.

3. Vorrichtung nach Anspruch 1 oder 2, **dadurch gekennzeichnet**, daß der Einsatz (20) die Aufnahmezahnung (19) abdeckt.

4. Vorrichtung nach einem der Ansprüche 1 bis 3, **dadurch gekennzeichnet**, daß der Einsatz die vorstehende Zahnung abdeckt.

5. Vorrichtung nach einem der Ansprüche 1 bis 4, **dadurch gekennzeichnet**, daß der Einsatz (20) geteilt ist.

6. Vorrichtung nach einem der vorangehenden Ansprüche, **dadurch gekennzeichnet**, daß der besagte Einsatz eine veränderliche Dicke zwischen den mit den Zahnungen in Kontakt tretenden Bereichen und den inaktiven Bereichen aufweist.

7. Vorrichtung nach einem der vorangehenden Ansprüche, **gekennzeichnet** durch Überdicken, die an den Kontaktflanken des Einsatzes (20) mit den Zahnungen (18, 19) angeordnet sind.

8. Vorrichtung nach einem der vorangehenden Ansprüche, **dadurch gekennzeichnet**, daß sich der Einsatz an die Form der Zahnung, die er trägt, anpaßt.

9. Vorrichtung nach einem der vorangehenden Ansprüche, **dadurch gekennzeichnet**, daß Zwischenräume (21) zwischen dem Einsatz und einer der Zahnungen, die er trägt, angeordnet sind, die sich mit zunehmendem Zusammendrücken des Einsatzes verkleinern.

10. Vorrichtung nach einem der vorangehenden Ansprüche, **dadurch gekennzeichnet**, daß der Werkstoff des Einsatzes (20) aus Kunststoff, Blei, Gußeisen oder Aluminium ausgewählt ist.

11. Vorrichtung nach einem der vorangehenden Ansprüche, **dadurch gekennzeichnet**, daß der Einsatz (20) fest mit einer der benachbarten Reibscheiben (22A, 22B) verbunden ist.

12. Vorrichtung nach Anspruch 11, **dadurch gekennzeichnet**, daß der Einsatz (20) an der Nabe oder an der Nabenscheibe verklebt oder aufgeformt ist.

13. Vorrichtung nach Anspruch 11, **dadurch gekennzeichnet**, daß der Einsatz (20) an einer der besagten Reibscheiben entweder verklebt oder aufgeformt ist.

14. Vorrichtung nach einem der Ansprüche 11 bis 13, **dadurch gekennzeichnet**, daß wenigstens eine der Reibscheiben (22A, 22B) an ihrem inneren Umfang eine Aufnahmezahnung aufweist, um an der vorstehenden Zahnung (18) der Nabe (10) mit einem Spiel einzugreifen, das kleiner als das zwischen der vorstehenden Zahnung (18) der Nabe (10) und der Aufnahmezahnung (19) der Nabenscheibe (11) vorgesehene Spiel ist.

## Claims

1. A torsion damping device comprising two coaxial parts (A, B) mounted for rotation of one with respect to the other, within the limits of an angular displacement which is predetermined by loose coupling means (16) and against the action of resilient means (27) referred to as predamping and centring means, wherein the loose coupling means comprise a set of male teeth (18) formed at the outer periphery of a hub (10) which essentially constitutes a first one (A) of the said coaxial parts (A, B), and a set of female teeth (19) formed on the inner periphery of a hub plate (11) which essentially constitutes a second one (B) of the said coaxial parts, the said hub plate (11) surrounding the hub (10), the said device including a third part (C) consisting essentially of two guide rings (12) disposed on either side of the hub plate (11) and surrounding the hub (12), the device further including, on the one hand, a crown insert (20) of shock absorbing material which is disposed between the peripheries of the said male teeth (18) and female teeth (19), and on the other hand, a predamping subassembly comprising a predamping cassette which comprises resilient predamping means (27), the said cassette being arranged between the hub (10) and the hub plate (11) and being situated in a plane offset from that of the hub plate (11), characterised in that the predamping cassette is mounted axially between the hub plate (11) and one of the guide rings (12) of the third part (C), and in that friction rings (22A, 22B), axially immobilising the insert, are disposed on either side of the said insert and are coaxial with the hub plate (11).

2. A device according to Claim 1, characterised in that the said cassette includes a secondary damper plate (40) located between two radial plates (26) which are driven in rotation by the hub plate (11).

3. A device according to Claim 1 or Claim 2, characterised in that the insert (20) overlies the set of female teeth (19).

4. A device according to any one of Claims 1 to 3, characterised in that the insert overlies the set of male teeth.

5. A device according to any one of Claims 1 to 4, characterised in that the insert (20) is of split form.

6. A device according to any one of the preceding Claims, characterised in that the said insert has a variable thickness between the zones which come into contact with the teeth and the inactive zones.

7. A device according to any one of the preceding Claims, characterised by thicker parts provided on the sides through which the insert (20) makes contact with-the sets of teeth (18, 19).

8. A device according to any one of the preceding Claims, characterised in that the insert matches the shape of the set of teeth which carries it.

9. A device according to any one of the preceding Claims, characterised in that voids (21) are provided between the insert and one of the sets of teeth which carries it, which are reduced with the crushing of the insert.

10. A device according to any one of the preceding Claims, characterised in that the material of the insert (20) is chosen from amongst plastic, lead, cast iron or aluminium.

11. A device according to any one of the preceding Claims, characterised in that the insert (20) is fixed to one of the adjacent friction rings (22A, 22B).

12. A device according to Claim 11, characterised in that the insert is adhesively bonded or moulded onto the hub or hub plate.

13. A device according to Claim 11, characterised in that the insert (20) is either adhesively bonded or moulded onto one of the said friction rings.

14. A device according to any one of Claims 11 to 13, characterised in that at least one of the friction rings (22A, 22B) has at its internal periphery a female set of teeth for meshing with the male set of teeth (18) on the hub (10) with a clearance less than that provided between the male set of teeth (18) on the hub (10) and the female set of teeth (19) on the hub plate (11).
